Europäisches Patentamt

European Patent Office

Office européen des brevets

(19)

(11)  EP 0 807 864 B1

(12)  **EUROPEAN PATENT SPECIFICATION**

(45) Date of publication and mention
of the grant of the patent:
**10.07.2002   Bulletin 2002/28**

(21) Application number: **95906541.8**

(22) Date of filing: **30.01.1995**

(51) Int Cl.⁷: **G03G 15/01**

(86) International application number:
**PCT/JP95/00114**

(87) International publication number:
**WO 96/24091 (08.08.1996 Gazette 1996/36)**

(54) **COLOR ELECTROPHOTOGRAPHIC PRINTER AND SUCH METHOD**

ELEKTROPHOTOGRAPHISCHER FARBDRUCKER UND SOLCHE METHODE

IMPRIMANTE ELECTROPHOTOGRAPHIQUE COULEUR ET TEL PROCEDE

(84) Designated Contracting States:
**DE**

(43) Date of publication of application:
**19.11.1997   Bulletin 1997/47**

(73) Proprietors:
• **Hitachi, Ltd.**
**Chiyoda-ku, Tokyo 101 (JP)**
• **HITACHI KOKI CO., LTD.**
**Chiyoda-ku, Tokyo 100 (JP)**

(72) Inventors:
• **KOBAYASHI, Shinya**
**Ibaraki 310 (JP)**
• **SATOU, Kunio**
**Ibaraki 316 (JP)**
• **OKANO, Mamoru**
**Ibaraki 316 (JP)**

• **MASUDA, Kazuhito**
**Ibaraki 316 (JP)**
• **ADACHI, Masaya**
**Ibaraki 316 (JP)**
• **HOSHI, Nobuyoshi**
**Ibaraki 312 (JP)**

(74) Representative: **Beetz & Partner Patentanwälte**
**Steinsdorfstrasse 10**
**80538 München (DE)**

(56) References cited:
**EP-A- 0 606 982      JP-A- 1 102 584**
**JP-A- 4 056 946       JP-A- 6 115 174**
**JP-A- 59 164 568     JP-A- 62 188 567**
**JP-A- 63 201 671     US-A- 5 223 906**
**US-A- 5 338 631**

## Description

The present invention is concerned with a color electrophotographic printer, and especially, the present invention relates to a color electrophotographic printer which can develop a toner image of four colors by a two times exposure or a simultaneous exposure of two spots.

In a known color electrophotographic printer, as disclosed in the JP-A-48-37148, there is disclosed a method wherein electrostatic latent images for both normal development and inversion development are formed on a photosensitive member and wherein two colors of the latent images are developed by one exposure. The electrostatic latent images of four colors are formed by using the prior art, wherein different two places are exposed sequentially, and then the formed electrostatic latent images are developed with four developing devices.

In the method of printing the color image as described in the EP 582 454 A1 yellow color (inversion development) and a black color (normal development) toner images are developed. After the second charging and exposing, the toner images of a magenta color (inversion development) and cyan color (normal development) are developed on the above mentioned toner images.

In the conventional color electrophotographic printer, the toners of a cyan color and a magenta color were physically imposed on printing paper so that they become two layers of top and bottom, and the toners of the two colors are melted and color mixed in the fixing machine. This technique of color mixing is called a method of subtraction color mixing and is an important technique to obtain a full-color with color materials. However, in an apparatus shown in this EP 582 454 A1, because the toners of two colors in the same place on the photosensitive member can not be developed by one exposure, and the technique of subtraction color mixing cannot be used. As for a blue color, the color toners of two colors of a cyan color and magenta color are adjoined to each other in the minute areas so that a high density is obtained by further mixing black color in the toners. The method of adjoining toners in place is called an additive color mixing method. In case of the additive color mixing method, when the color materials like toners are color mixed, it is the well-known fact that chromaticness as well as density becomes small.

Next, because it is impossible to improve only chromaticness without increasing density by mixing black color, bright and high chromaticness blue color in a conventional color electrophotographic printer can not be reproduced at all. For these reasons, because the color reproduction range of a record image becomes narrow, a full-color image with a high picture quality cannot be obtained. In said EP 582 454 A1, it is described that the blue color by this color mixing method is approximated. In the apparatus disclosed in said document, because either two colors of three primary colors must be developed by one exposure, at least one color of red, green and blue colors becomes the approximated color.

In the technique shown in the above EP 582 454 A1, the present invention has an object to obtain a color mixing image with high chromaticness by a subtraction color mixing method, even in case the color toner of two colors is formed by one exposure.

In the color electrophotographic printer having means for receiving the image information from information processors such as a computer, the color electrophotographic printer of the invention comprises the features of the independent claims 1 and 8, respectively.

According to the invention the color judgement is expressed by the method of a subtraction color mixing from the received image information, dividing means for dividing the judged pixel into two in different areas. Exposure means are provided for simultaneously exposing the electrostatic latent images for two colors on a photosensitive member corresponding to the divided pixel. The color electrophotographic printer includes further developing means for normally developing and inversely developing the electrostatic latent images of the divided pixel in the different layer thicknesses, transferring means for transferring the developed toner images to a recording medium, and means for fixing a non-fixed toner image on the recording medium, causing an adequate slide. For example, the electrostatic latent images for two colors are formed out by one exposure. The electrostatic latent image is normally developed at first by using the M (magenta) toner, and then is inversely developed by using the C (cyan) toner. As mentioned above, a color mixing image with high chromaticness cannot be obtained unless color mixing is represented by the subtraction color mixing method for the blue color obtained from these two colors. Then, pixels to be printed from now on are judged whether there are blue, based on the image signal input into the printer. In case the color is judged as blue, a part of the pixel that should be blue is divided into two at a certain ratio of areas, a magenta toner is at first applied to the broader area to develop it in a thicker layer than usual. Next, the cyan toner is applied to the narrower area to develop it in a further thicker layer than the magenta toner. By doing so, the cyan toner layer which is thicker than the magenta toner layer can physically move more easily on the photosensitive member or the printing sheet surface than the magenta layer. Further, because the electric adhesion power which works between the surface of the photosensitive member and the magenta toner whose layer thickness is smaller is smaller than that between the photosensitive member surface and the magenta toner layer, the cyan toner layer can move on the photosensitive member or paper more easily than the other. Then, in the latter part of the printing process including development, re-charging, transferring and fixing, the movement quantity of the cyan toner becomes larger than that of the magenta toner and the cyan toner is physically easily imposed on the magenta toner. At the time of fixing, when sliding between the fluid toner image on the sheet and the fixing device takes place within a proper time period for fixing the toner, cyan toner which is easier to move can be imposed on the magenta toner which is harder to move. By the above, because color toners of two colors by one exposure can be color mixed by the subtraction color mixing method, a color mixing image with high chromaticness can be obtained.

Brief Description of Drawings

Fig. 1 is a figure illustrating an example of the whole structure of a color electrophotographic printer of the present invention.

Fig. 2 is an operation explanation figure of the present invention.

Fig. 3 shows contents recorded in an exposure memory.

Fig. 4 shows a method of forming a conventional blue color.

Fig. 5 shows a method of forming the blue color of the present invention

Fig. 6 shows an image signal processing circuit of the present invention.

Fig. 7 shows a belt fixing device of the present invention.

Fig. 8 shows coloring characteristics by color mixing of cyan and magenta.

Fig. 9 shows a re-charger.

Fig. 10 shows another method of exposure of the present invention.

Fig. 11 is a figure explaining another operation of the present invention.

Fig. 12 shows an image signal processing circuit of the present invention

Fig. 13 and Fig. 14 are other operation explanation figures of the present invention.

Fig. 15 is a figure showing the contents recorded in the exposure memory.

Best Mode for Carrying Out the Invention

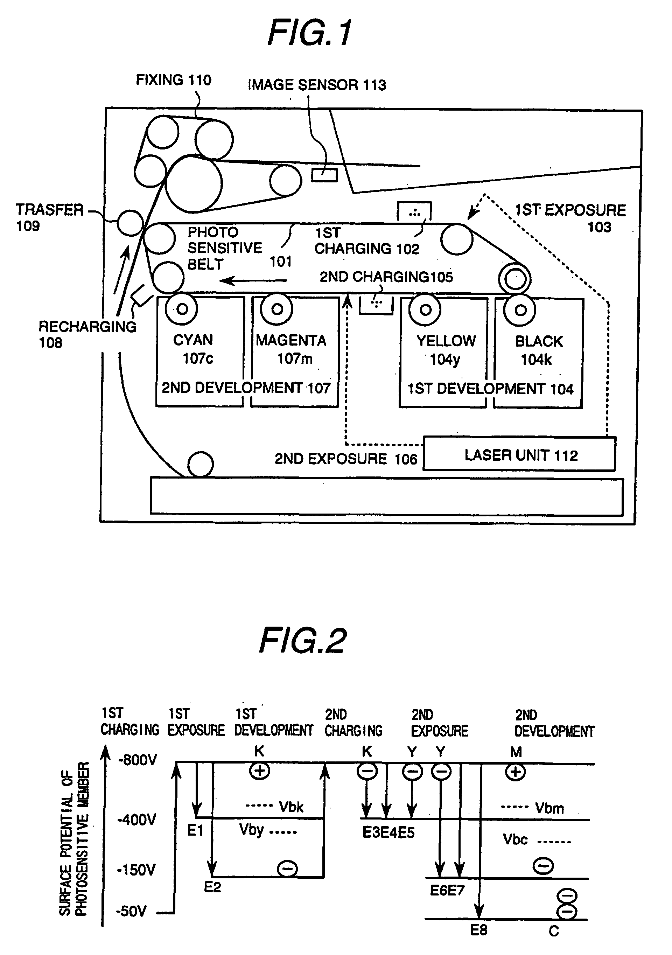

In the following, one example of the present invention is explained by Fig. 1 through Fig. 4. The whole structure of the printer of the present invention is shown in Fig. 1. Around the photosensitive belt 101 there are disposed in the clockwise direction the first charging means 102, the first exposure light 103, black development device 104 k and yellow development device 104y that are the first developing means 104, the second charging means 105, the second exposure light 106, the second developing means 107 which are magenta development device 107m and cyan development device 107c, re-charger 108 and transferring means 109.

The printing process of this equipment is as follows. The photosensitive belt 10 is rotated in the direction of an arrow at a specified speed. Then, the surface of photosensitive belt 101 is uniformly charged by first charging means 102. When a charged photosensitive belt surface is exposed with the first exposure light that came out from laser unit 112, there is formed the electrostatic latent image corresponding to yellow and black image information. The electrostatic latent image of yellow color is not always for yellow electrostatic latent image, but the color formed by color mixing yellow with cyan or magenta is formed as an electrostatic latent image of yellow.

The electrostatic latent image formed on the photosensitive belt is developed by black toner, when it comes to the position of black development device 104 k. Then, it is developed by yellow toner , when it comes to the position of yellow development device 104y. The photosensitive belt surface where the adhered black and yellow toners adhere is uniformly charged by the second charging means 105. The electrostatic latent images of cyan and magenta are then formed by the second exposure light 106. The electrostatic latent images are developed by the toners of each color by magenta developing means and cyan developing means. Then, the charge polarity of the color toner images formed on the photosensitive belt is adjusted by re-charging means 108. The color toner image of which the polarity was adjusted is transferred to sheet 111 by transferring means 109. The color toner image transferred to sheet 111 is melt-fixed by passing it through fixing means 110. The state of the fixed color image is detected by image sensor 113. This detected image information is input into means of controlling the printer ( not shown) to control means for charging, means for exposing, development bias, etc..

Two semiconductor lasers are disposed in laser unit 112, which emit light by laser drive electric currents L1 for the first exposure and L2 for the second exposure, which will be described later. The radiated laser beam is deflected by a known laser optical system. The laser beam scans and exposes photosensitive belt 101 as first exposure 103 and the second exposure light 106. There are the positive charging black and magenta toners in the development machine 104 k and 107m of this example. And, there are negatively chargeable yellow and cyan toners in the development machine (104y and 107c). The development bias electric potential which will be treated later is applied to the development roll in each development machine.

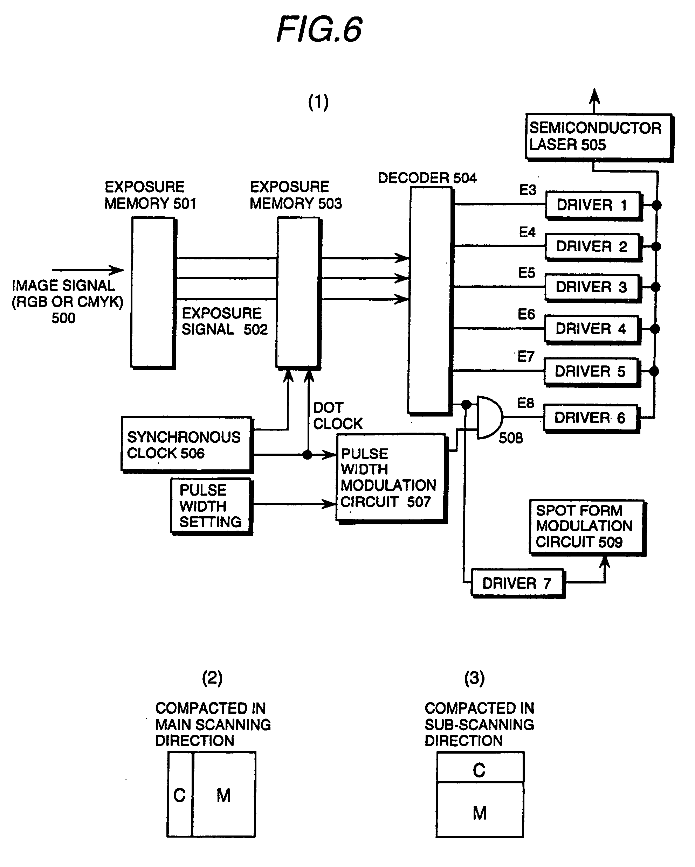

An operation explanation of the printer of the present invention printer will be made in the following. An image signal processing circuit is shown in Fig. 6. Image signal 500 shown as RGB or CMYK from the host apparatus is converted into exposure signal 502 in exposure method memory 501 in which the exposure method in the apparatus of the present invention, which will be described later, is stored. Exposure signal 502 is output to the first exposure light 103 and the second exposure light 106. However, the first exposure light 103 is almost the same as the conventional three level exposure method.

As shown in Fig. 2, the photosensitive belt is uniformly charged to the negative in the present invention. The processing in the first exposure light 103 is as follows. Deflection light corresponding to the images of black and yellow from the laser unit is emitted to the photosensitive belt charged to the negative. Control of an optical quantity can realize the change of the colors. While not shown in Fig. 6, the explanation is omitted because the same circuit structure as the second exposure is employed.

Exposure signal 502 of 3 bits is output to the second exposure light 103 and is stored in exposure memory 503. In this apparatus, there is two exposure points as shown in Fig. 1, and there is a time difference between a point to which the first exposure light 103 is irradiated and a point to which the second exposure light 103 is irradiated. The time difference is temporarily stored in exposure memory 503 for the purpose of time adjustment. Synchronous clock 506 (line clock, dot clock, etc.) is also input into exposure memory 503 for storage. Then, exposure signal 502 of 3 bits becomes the switch signal of each laser driver 1 to 6 via decoder 504 which decodes the signals 502 to 8 lines. Laser drivers 1 to 6 are the well-known laser drivers which make semiconductor laser 505 ON-OFF at a constant output. Generally, while an output stabilization circuit using an optical sensor installed in semiconductor laser 505 is used, this circuit is omitted in this figure.

A laser output set at each driver 1 to 6 is referred to as E3, E4, ··· and E8, respectively. This laser output is expressed here as an exposure quantity on the surface of the photosensitive belt (photosensitive member). However, the input signal to driver 6 for a strong exposure is input into the AND circuit 508 as a pulse signal of every dot by well-known pulse-width modulation circuit 507 which can set a pulse width, to thereby take AND with output of decoder 504 and to switch on. As a result, the input signal to driver 6 becomes a pulse of which width is shorter than the width of one dot. This is a circuit for recording dots which are narrow in the main scanning direction. By the use of this in this example, the adhesion area of the normal development toner is decided at first, and then the adhesion layer thickness of the inversion development toner is decided by determining an exposure quantity. Of course, the apparatus of the present invention has a sufficient image-resolution in the main scanning direction.

Besides the above method, by using circuit 509 and a well-known element of which the spot shape in a secondary scanning direction can be changed, the present invention also can be realized by recording narrow dots in the sub-scanning direction. For example, as shown in the figure, the adhesion areas of the normal development toner and the inversion development toner are first decided by reducing the spot size in the sub-scanning direction in accordance with outputting driver 7. Thereafter, the adhesion layer thickness of each toner is decided by deciding an exposure quantity.

In the following, the details of this circuit are explained. This apparatus reproduces seven colors that are necessary for obtaining full-color printing, i.e. black K, red R, green G, blue B, cyan C, magenta M and yellow Y. An operation of the printer of the present invention is explained by using Fig. 2. First, the surface potential of photosensitive belt 101 is charged to -800 V by the first charging means 102. As a matter of fact, the surface potential reduces gradually due to dark damping, but there is no influence by the reduction because the difference is only around 20 V. Then, the image is exposed by using the first exposure light 103.

    1) The place which is to be developed with a black toner is kept at -800 V without exposing.
    2) The place which is to be developed with a yellow toner is strongly exposed to be -100 V by an exposure amount E2.
    3) The place which is not developed with any of the toners is faintly exposed to be -450 V by an exposure amount E1.

An electric potential Vbk of -550 V for developing bias is applied to the developing roll of the black development machine 104 k of the first development, and an electric potential Vby of -350 V for development bias is applied to yellow development rolls of yellow development machine 104k so that the images are developed as desired. Each electric potential is an approximate figure, and the figures can be altered more or less, according to conditions. Next, the surface of photosensitive belt 101 is charged by the second charging means 105 to be -800 V as same as above. At this time, the positively charged black toner is reversed to the negative polarity.

Next, the latent images are exposed by using the second exposure light 106 as follows.

    1) The place which represents black is faintly exposed to be -450 V by exposure amount E3 on the place which was developed with the black toner.
    2) The place which represents white is faintly exposed to be -450V by exposure amount E4 on the place which was not developed with any of the toners.
    3) The place which represents yellow is faintly exposed to be -450 V by exposure amount E5 on the place which was developed' with the yellow toner.
    4) The place which represents green is strongly exposed to be -100 V by exposure amount E6 on the place which was developed with the yellow toner.
    5) The place which represents a cyan color is strongly exposed to be -100 V by exposure amount E7 on the place which was not developed' with any of the toners.
    6) The place developed with a cyan toner of a layer thicker than usual for forming a blue color which is formed by the subtraction color mixing method, which will be' explained later, is more strongly exposed to be -50 V by exposure amount E8 on the place which was not developed with any of the toners.

7) The place which represents red is kept to -800V without exposing the place which was developed with the yellow toner.

8) The place which represents a magenta color is kept to -800 V without exposing the place which was not developed with any of the toners.

However, in exposing from the tops of toners (E3, E5, E6), exposure amounts are a little bit larger than the necessary in consideration of the light absorption in the toner layers. The optical quantity absorbed is predetermined by experiments. An electric potential Vbm of -550 V for development bias is applied to the developing roll of magenta development machine 107m of the second development. An electric potential Vbc of -350 V for development bias is applied to the developing roll of cyan development machine 107c thereby to be developed as desired.

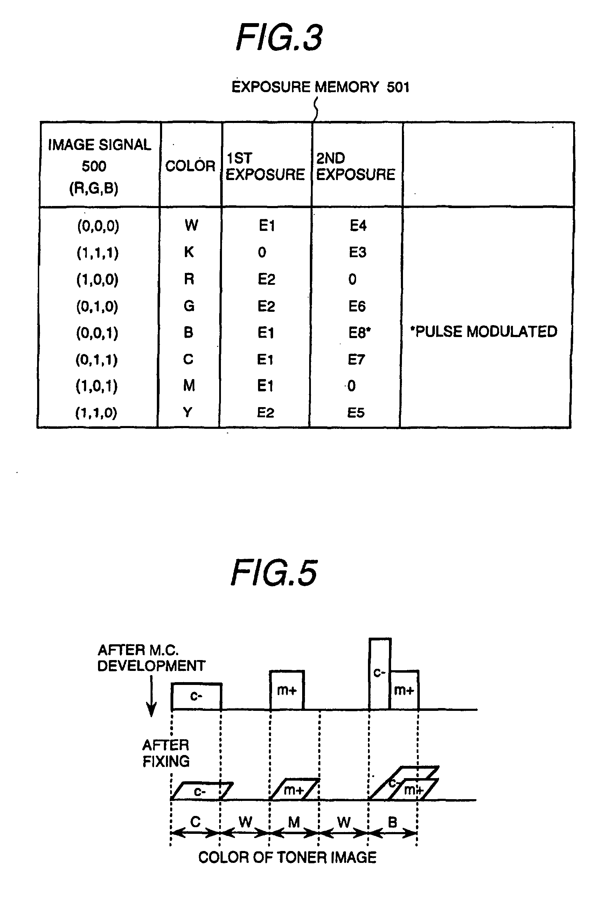

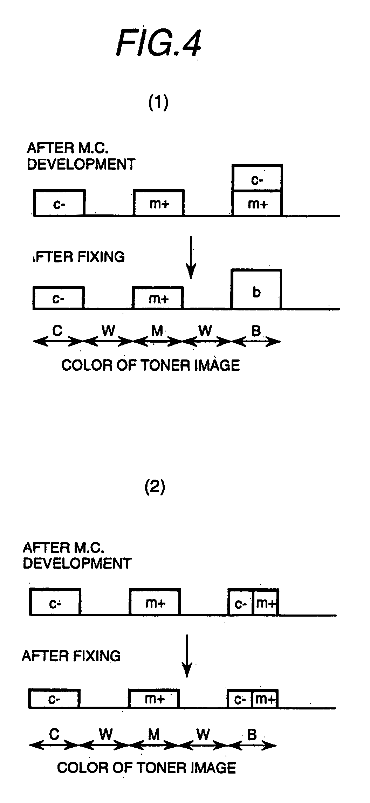

Fig. 3 is a summary of the above exposure method. The contents of Fig. 3 are stored in exposure memory 501. As shown in the table, three pieces of information of 0, E1 and E2 become exposure signals of 2 bit in the first exposure. In the second exposure, seven pieces of information of 0, E3, E4, E5, E6, E7 and E8 become exposure signals 502 of 3 bits. By exposing in the above manner, the primary colors other than blue color can be reproduced by all ordinary subtraction color mixing methods. Then, a method of forming the blue color by the subtraction color mixing method is described by using Fig. 4 - Fig. 6.

A forming method of blue color with a conventional apparatus is shown in Fig. 4 (1). The upper figure shows the section of each color on the surface of the photosensitive member after developing with magenta M and cyan C. The lower figure indicates the section of each color on the sheet after fixing. Fig. 4 expresses the state of 5 continuous pixels, wherein the direction is either the main scanning direction or sub-scanning direction. When the record signals of a cyan, a magenta and a yellow are denoted as (C,M,Y), the record signals of (1,0,0), (0,0,0), (0,1,0), (0,0,0) and (1,1,0) are assigned for every pixel from the left, and they represent cyan C, white color W, magenta M, white color W and blue B, respectively. In the conventional apparatus, in obtaining blue color as shown in Fig. 4(1), the toners of cyan and magenta were physically imposed on the photosensitive member or on the sheet to form top and bottom two layers, and then the toners were melted to color mix in the fixing machine. This method of color mixing is called a method of subtraction color mixing, and this is an indispensable technique to obtain full-color printing by color materials.

On the other hand, a method of forming blue color with the apparatus is shown in Fig. 4 (2), which is shown in Japanese patent Laid-open print No. 6-115174. The imposed toners of two colors on the same place of the photosensitive member cannot be developed by one exposure according to the apparatus shown in Fig. 4 (2). That is, even if the toners of a cyan and a magenta color are physically imposed to make top and bottom two layers on the photosensitive member, toners cannot be color mixed. In obtaining blue color, as shown in the figure, the color toners of two colors of cyan and magenta are adjoined to each other in the minute areas. In this case, the two colors of cyan and magenta do not mix even after fixing, thereby to produce blue color of low chromaticness.

In Fig. 5, there is shown a blue formation method with the apparatus of the present invention. In forming blue color by the present invention, exposure is effected by the second exposure light 106 so that the layer thickness of adhered cyan toner and magenta toner become thicker than that of the conventional layer, as shown in Fig.2. In the Fig. 5, while the thickness of the cyan layer at the left end is normally the conventional layer thickness, the thicknesses of the cyan and magenta layers of the right side are made thicker than that. However, the toner is not adhered to one pixel, but is adhered to an area which is narrower than one pixel, as shown in the figure. As a result, the total volume of the toner adhered per one pixel becomes almost the same as that of the blue formation method with a conventional apparatus shown in Fig. 4 (1).

When explained in detail, the toner layer of the magenta which is developed at first in the second development, has a wider area than the adhesion area of the cyan toner which develops later and is thinner than the cyan layer. When the layer thickness of a toner image by the magenta developing machine in the preceding step is thick, the toner image will be scratched off by the cyan developing machine in the later step. In explaining developing characteristics of the toner further, the toner layer which needs to be greatly changed in thickness should be of the inversion development. In this example, an adhesion area of the negatively charged cyan toner of inversion development is narrowed, but the layer thickness of the toner is increased by strong exposure. On the other hand, it is very difficult to adjust the layer thickness of the magenta toner of normal development by exposure because the inclination of the sensitivity curve against the exposure quantity of the photosensitive member is very abrupt. Then, the adhesion quantity of normal development magenta toner in the pixel is adjusted by setting a pulse width in pulse-width modulation circuit 507 of Fig. 6. That is, the adhesion quantity is adjusted by area without changing the layer thickness. By using a strong exposure corresponding to the area left in the pixel, the layer thickness of the adhered cyan toner of inversion development is increased so that the total adhesion volume is adjusted. On this occasion, the area of magenta toner is set to be larger than that of cyan toner, and the layer thickness of cyan toner becomes thicker than the other. When a pulse width in pulse-width modulation circuit 507 of Fig. 6 (1) is set to be small, and at the same time, when exposure quantity E8 is adjusted by driver 6 to make the total volume of the adhered toner constant as was explained above, the operation shown in Fig. 6 (2) is realized.

When the laser spot size in the sub-scanning direction is shortened, the area of the part which is developed with cyan toner becomes small as shown in Fig. 6 (3). On the contrary, the area of the part which is developed with magenta toner enlarges. Because the layer thickness of the conventional toner is adjusted to the layer thickness of the highest chromaticness, the further increase in the layer thickness does not lead to improvement of coloring, even if the developed images are fixed. Then, the apparatus of the present invention is provided with means of physically mixing cyan toner and magenta toner of which layer thicknesses are increased in fixing machine 110.

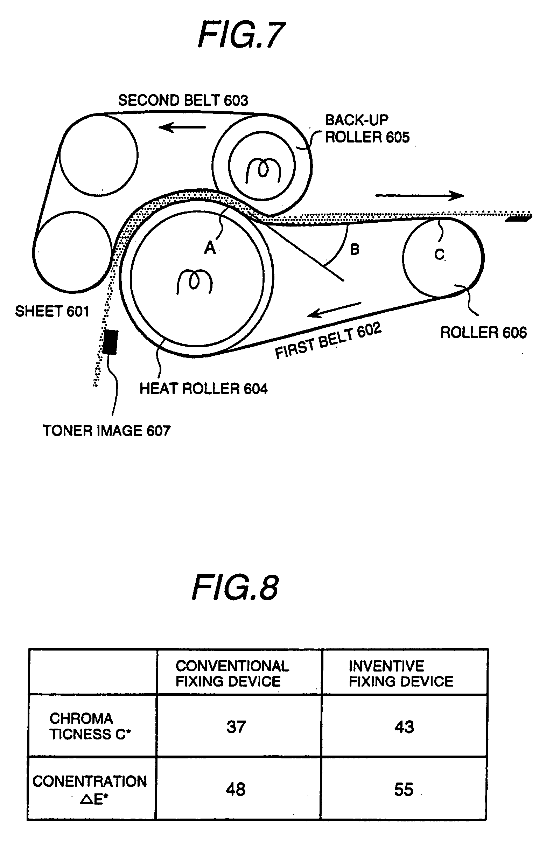

In the following, the fixing device and fixing method are explained by using Fig. 7. The belt fixing device, which is held between the first belt 602 and the second belt 603, of the present invention is shown in Fig. 7. Sheet 601 on which the image of a non-fixed toner was put is transferred around metallic heat roller 604 which has a heat source therein. Toner 607 on the sheet is preheated during that time. Then, toner 607, being held between rubber backup rollers 605 one of which has a heat source therein is fixed by heat and pressure. The sheet has been wound in the right direction in Fig. 7, but it bends in the right direction immediately after both rollers 604, 605 ( at point A), and thereafter, it goes straight ahead together with the first belt. Therefore, there arises a relative speed difference between the first belt 602 and sheet 601 after point A, and because a pressure is not applied thereto, both deviate from each other gradually with a traveling distance.

The toner fixed at the point A has fluidity until it is cooled and solidified. Because toner is still soft, while the sheet advances several cm from point A, the toner image also deviates followed by deviation between the first belt 602 and sheet 601 in this apparatus. This is because the general phenomenon called a hot offset locally occurs. In exfoliation point C constituted by the first belt 602 and sheet 601, toner is sufficiently cooled, and thus the hot offset does not occur.

The following approximate solution of deviation quantity S between the first belt 602 and sheet 601 is obtained by calculating radii Rh and Rb of heat roller 604 and backup roller 605, thicknesses Db and Dp of the first belt 602 and sheet 601, and angle B (radian) constituted by the tangential direction in point A indicated in the figure and a straight advancing direction of sheet 601 exfoliated from backup roller 605.

$$S = \frac{(Db+Dp)}{2} \left( \frac{x}{R\,h} + B \right)$$

Because x is the traveling distance from point A, which is the distance within which the toner hardens, x is several cm. This changes by the kind of toners and conditions for fixing. Deviation quantity S is approximately 10μm per x = 1mm in case of this apparatus. The important point is that when angle B is changed, deviation quantity S can be controlled. The angle B can be adjusted in this apparatus. The deviation quantity S of the toner image can be adjusted so that deviation is one dot width or so in this fixing machine. When the deviation becomes larger, the following image resolution declines. When deviation quantity S is controlled to be one dot width as shown in Fig. 5, the cyan toner and the magenta toner images that represent blue color after development are so fixed after development that the cyan toner is imposed on the magenta toner. As shown in Fig. 4 (1), blue color can be colored by the same subtraction color mixing as the conventional apparatus in which two layers of toners were imposed. As a result, blue color with high chromaticness is obtained. Adjustment of the bent angle B is controlled by actually measuring the angle in the experiments. The adjustment can be automatically done by the image sensor 113 shown in Fig. 1, which is a well-known photosensor.

While one of the results of improvement in blue chromaticness by this fixing machine is shown in Fig. 8, density of toners as well as chromaticness becomes high at the same time. Therefore, a blue test image is recorded so that the chromaticness or density is measured by image sensor 113. In addition, the single linewidth of a cyan color or a magenta color is measured, and the position of roller 606 is changed automatically so that both colors become compatible. As a result, it is possible to obtain a stabilized picture quality even if deviation quantity S changes by an environment and a life.

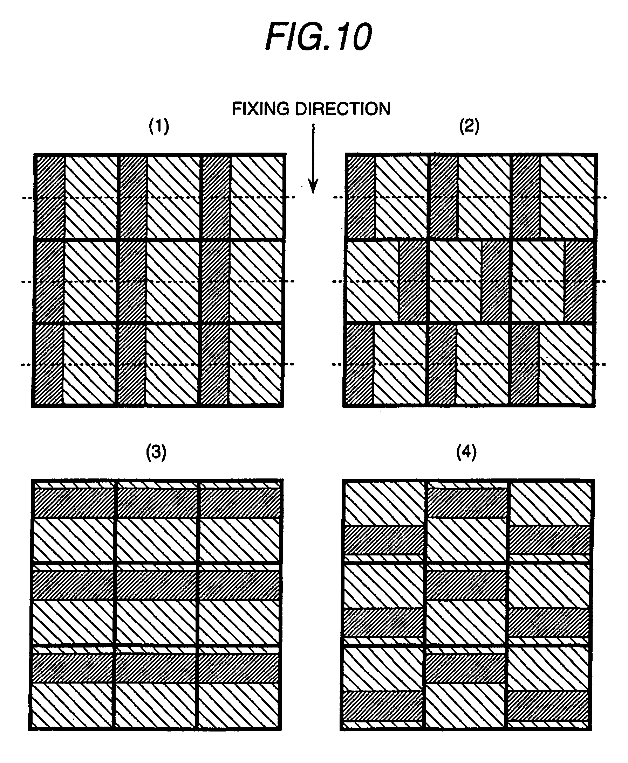

In getting a blue color from the cyan and magenta colors, when exposed by the pulse -width modulation in the main scanning direction and when exposed as shown in Fig. 10 (1), a subtraction color mixing is hard to take place, due to the deviation in the fixing apparatus. Then, as shown in Fig. 10 (2), if the positions to be printed with the cyan and magenta colors are changed for every line, the subtraction color mixing is easy to take place. In case the spot sizes in the sub-scanning direction and the main scanning direction are modulated and exposed, toners are hard to overlap uniformly, due to a deviation occurred by the fixing apparatus when exposed as shown in Fig. 10 (3). Then, if the positions to be printed with the cyan and magenta colors is changed for every line, as shown in Fig. 10 (4), a uniform subtraction color mixing is carried out.

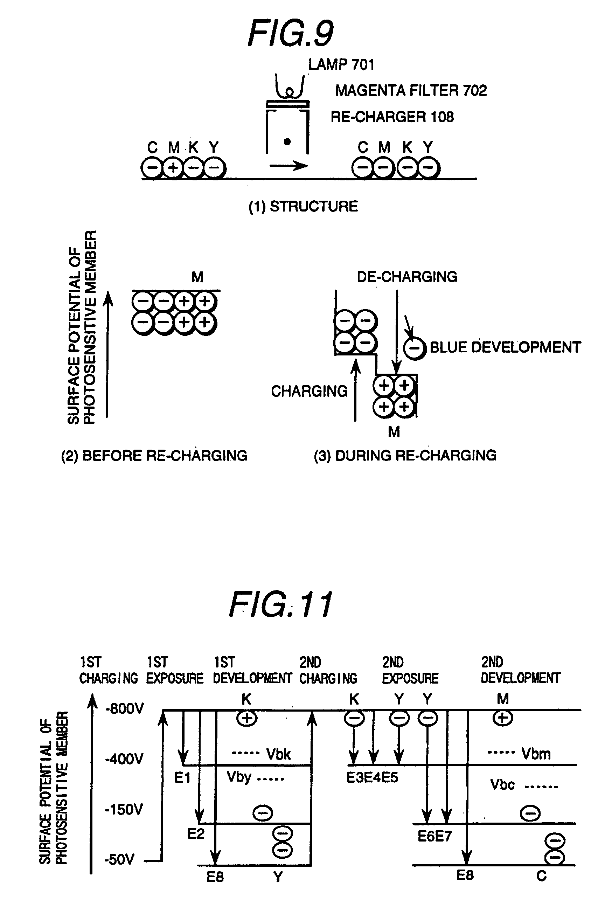

Re-charger 108 of a Fig. 1 is explained by using Fig. 9. Its structure is shown in Fig. 9 (1). Re-charger 108 charges the positive charge toner among the toners of bipolarity developed on the photosensitive member to the negative charge toner, which can be electrically transferred in transferring device 109. In this example, the black and the yellow toners of the four color toners developed on the photosensitive member at the place of re-charger 108 are already charged to the negative by the second charger 105. The cyan is a negatively charged from the beginning, only magenta is the positive charge toner, which should be the toner whose polarity should be reversed by re-charger 108 after all.

In order to transfer efficiently, not only the polarity of toner is uniform, but also the charging quantity of toner should be a proper value at transferring point 109. That is, it is known that even if charging quantity is larger or smaller than a proper value, transferring efficiency declines. Because toner is uniformly charged irrespectively of the charged polarity in the conventional apparatus, the charging quantity which has been already charged negative is essentially larger than the charging quantity of the toner that is changed from the positive to the negative. Especially, the tendency was remarkable in transferring at high speed, and the both toners could not be transferred efficiently. In this example, as shown in the figure, lamp 701 and magenta transmission filter 702 were installed in the rear of the re-charger, and the light of magenta was irradiated simultaneously with re-charging.

In Fig. 9 (2), the surface potential of the photosensitive member before re-charging is shown. In Fig. 9 (3), there is shown the surface potential of the photosensitive member at the time of re-charging. Because the magenta toner M transmits the color light of a magenta best, a discharging lowers the surface potential of the photosensitive member below the magenta. When the surface potential is high, the electric current from the charger to the photosensitive member becomes small, and the charging quantity of the toner adhered to the photosensitive member does not become large so much. But, when a surface potential becomes low, the electric current from the charger to the photosensitive member increases, and the charging quantity of the toner adhered to the photosensitive member also increases. Therefore, when the charging quantity of the toners whose negative charging quantity is easy to become larger other than magenta is repressed and when magenta M whose negative charging quantity is easy to decrease increases the charging quantity of the toner, transferring 109 is done uniformly in transferring. The cyan toner for representing blue color is developed with the large layer thickness, according to the exposure method of the present invention. In this case, the toner near the surface of the cyan toner which is remote from the photosensitive member is easy to move. Those toners scatter on the magenta in the neighborhood as shown in Fig. 9 (3). As a result, the method of color mixing of the cyan and the magenta is similar to the subtraction color mixing method so that reproduction of vivid blue is possible.

In this example, the positive and negative toners that should be color mixed by the subtraction color mixing method in the second development are developed. On that occasions described above, development is carried out so that the layer thickness of inversion developing toner (the cyan toner in this example) becomes thicker, but in this example, the cyan is developed at the end of the second development, and the cyan toner layer of the large thickness is not mechanically scratched off by the developing machine for other colors. Then, an advantage of the subtraction color mixing method becomes remarkable, and color reproduction is improved further.

In the apparatus of this example, the problem of scratching off which is described below was not considered. While a method for making seven colors in order to make full color printing is shown in Fig. 2, red R in this case is not easily reproduced, however. Red R is developed and transferred by laminating the yellow toner at the first development and the magenta toner at the second development up and down. However, when the last cyan developing machine 107c develops the yellow toner which is charged to the negative by the first development with the cyan toner, the cyan toner is electrically pulled to the developing machine side and is scratched off by the cyan toner so that the cyan toner is taken into the cyan developing machine by means of the cyan toner developing roll.

In Fig. 2, because electric potential Vbc of -350V for the developing bias is applied to the developing roll of cyan developing machine 107c, and because the surface potential of the photosensitive member on which the yellow toner is put is -800V, the reverse voltage of 450V is applied between the photosensitive member and the developing roll, and thus it will be easily understood that the yellow toner is drawn into cyan development machine 107c by means of the development roll.

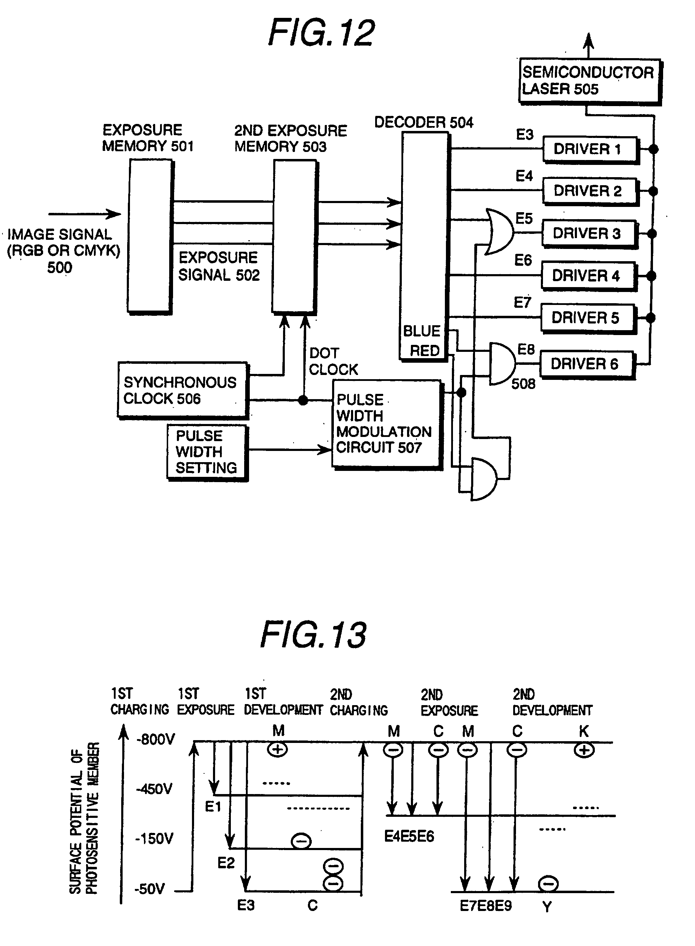

In order to evade this phenomenon, as shown in Fig. 11, as to the pixel for forming red in the first exposure, an exposure quantity and exposure timing for developing the yellow toner are made equal with the exposure quantity and exposure timing for the cyan toner in the pixel which forms the blue color. That is, the exposure quantity is made as E8, and the exposure timing and the signal processing circuit are made the same one shown in Fig. 6 (1) as in the cyan toner. In addition, in the second exposure, only the portion above the adhered yellow toner is exposed at exposure amount E5. Then, on the photosensitive member, the cyan of the blue toner and magenta toner shown in Fig. 5 is substituted for the yellow. Therefore, vivid red is reproduced like in the case of the blue, and the subtraction color mixing method is realized at the time of re-charging and fixing.

A circuit for the signal processing is shown in Fig. 12. Signal red indicating that the pixel to be printed is red is formed in the same way as the blue case, the pulse-width modulation circuit 507. The signal red is logic multiplicated with the modulation circuit. The result is logic added with drive signal E5 of driver 3 by inputting into driver 3.

In this example, the surface potential of the photosensitive member on which the yellow toner for forming red is placed becomes -450V so that the difference with development bias electric potential Vbc =-350V of the development roll of cyan development machine 107c becomes 100V and yellow toner is not drawn into cyan developing machine 107c, because this example method piles colors on the photosensitive member. The position dislocation between an image by the first exposure and an image by the second exposure becomes an average of 20μm or less, which is quite small, if the size of one pixel is 3 times or more (400 dots /inches in this example) of the position dislocation, an advantage of this example is apparent.

Another example of the present invention is explained by Fig. 13 below. In this example, the first developing means and the second developing means in the former example shown in Fig. 1 are composed in the opposite arrangement. That is, the apparatus was composed to develop the magenta of positive charging and the cyan of negative charging in the first developing means and to develop the black of positive charging and the yellow of negative charging in the second developing means. As shown in Fig. 13 of this example, the cyan and the magenta toners are charged in the negative by the second charging. Then, because the surface of the photosensitive member to which the toners are adhered is exposed by the second exposure light so that the absolute value of the surface potential of a photosensitive member becomes smaller than -450V, electrical scraping at the time of the second development does not occur unlike in the former example.

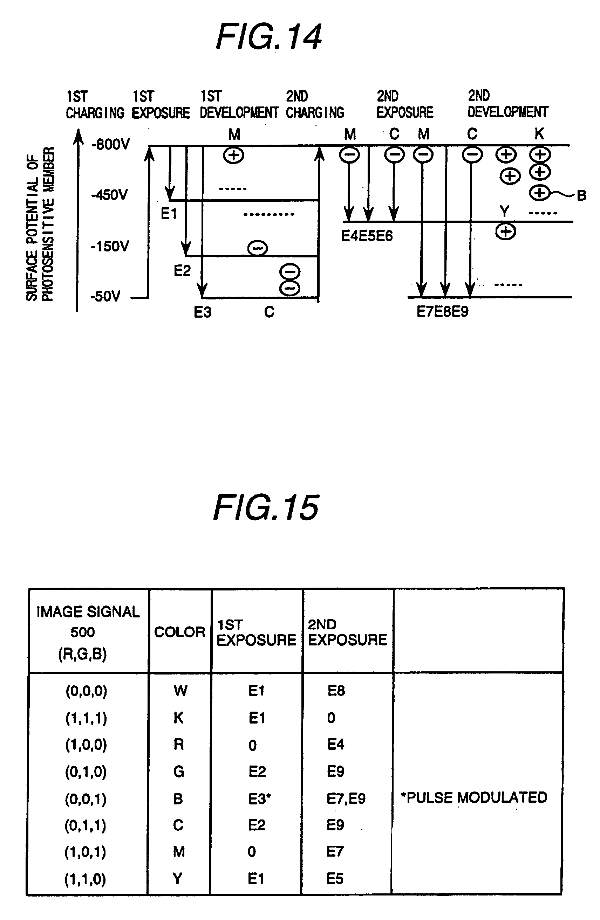

Another example of the present invention is explained by Fig. 14 and Fig. 15 below. This example used positive charging toner as a yellow toner in the example of Fig. 13 and used the blue toner of positive charging instead of a black toner in the former example. That is, the magenta toner of positive charging and the cyan toner of negative charging were developed in the first developing means and the yellow of positive charging and the blue toner of positive charging were developed in the second developing means. The exposure quantities in the first and second exposures are shown in Fig. 15. Especially, in case a black color is represented, the yellow and blue toners adhere simultaneously to take place color mixing in the second development. Because in this example the cyan and the magenta toners are charged in the negative by the second charging shown in Fig. 14 and because an exposure is done in such a manner that the absolute value of the surface potential of the photosensitive member becomes smaller than -450V by the second exposure, no electrical scraping in any colors occurs in the second development unlike in the former example.

As is described above, according to the present invention, because the positive and negative toners to be developed by one exposure can be physically color mixed, color images with high picture quality can be obtained by the subtraction color mixing method wherein color reproduction range can be enlarged. Further, because the electrical scraping phenomenon of the first development image in the second development can be reduced, color mixing in the developer can be prevented to obtain the stabilized color reproduction.

Industrial Applicability

As mentioned above, a color electrophotographic printer according to the present invention can be applied to printing parts of such as a color copier and a color facsimile as well as to a printer, a small printing part with high quantity can be acomplished.

**Claims**

1. Color electrophotographic printer having an exposure unit (103) for simultaneously creating latent images to form toner images in two colors, one by normal development and the other by inversion development,
   **characterised by**

   - means for judging whether a pixel is to be formed by the subtraction color mixing method,
   - means for dividing the positively judged pixel into two different areas which are simultaneously exposed by the exposure unit (103),
   - means (104) for developing the two areas of the divided pixel respectively by normal and inversion development with different toner layer thicknesses, and
   - means (110) for fixing the toner image under the condition of the fluid toner layers sliding.

2. Color printer according to claim 1, **characterized in that** the means of dividing the pixel into two different areas has means for deciding the adhesion layer thickness of the toner by the exposure quantity of a laser (112), wherein the adhesion area of normal development toner and inverse development toner are decided by the pulse width in the main scanning direction.

3. Color printer according to claim 1 or 2, **characterized in that** the dividing means has means for deciding the adhesion area of normal development toner and inverse development toner by the spot size in the secondary scanning direction, and for deciding an adhesion layer thickness by the exposure quantity of the laser.

4. Color printer according to one of the claims 1 to 3, **characterized in that** the exposure is done so that in the judged pixel the area of the reverse development is larger than the area of the normal development and the toner adhesion layer thickness of the inverse development becomes thinner than the area of the normal development.

5. Color printer according to one of the claims 1 to 4, **characterized in that** the fixing means (110) causing a proper slide for the non-fixed toner image has means of adjusting said slide quantity.

6. Color printer according to claim 5, **characterized by** means for changing a quantity to the backup roller of a belt for carrying the sheet.

7. Color printer according to one of the claims 1 to 6, **characterized in that** the re-charger for reversing the polarity before transferring is provided with means for applying the color light of a reversing toner color to the toners.

8. Color electrophotographic printer having a first exposure unit (103) for simultaneously creating latent images to form toner images in a first and second color, one by normal development and the other by inversion development, and having a second exposure unit (106) for simultaneously creating latent images to form toner images in a third and fourth color, one by normal development and the other by inversion development, **characterised by**

    means for judging whether a pixel is to be formed by a reverse development subsequent to exposure by one of the exposure units and by normal development subsequent to exposure by the other exposure unit,
    means for dividing the positively judged pixel into two different areas which are developed respectively by normal and inversion development with different toner layer thicknesses, and
    means (110) for fixing the toner image under the condition of the fluid toner layers sliding.

9. Color electrophotographic printing method in which latent images are simultaneously created by one exposure to form images in two colors, one by normal development and the other by inversion development, **characterized by** the steps of

    - judging whether a pixel is to be formed by the subtraction color mixing method,
    - dividing the positively judged pixel into two different areas,
    - developing the two areas of the divided pixel respectively by normal and inversion development with different toner layer thicknesses, and
    - fixing the toner images under the condition of the fluid toner layers sliding.

10. Color electrophotographic printing method in which

    - latent images are simultaneously created by a first exposure to form images in a first and second color, one by normal development and the other by inversion development, and
    - latent images are simultaneously created by a second exposure to form toner images in a third and fourth color, one by normal development and the other by inversion development,

    **characterized by** the steps of

    - judging whether a pixel is to be formed by a reverse development subsequent to one of the exposures and by normal development subsequent to the other one of the exposures,
    - dividing the positively judged pixel into two different areas, which are developed respectively by normal and inversion development with different toner layer thicknesses, and
    - fixing the toner images under the condition of the fluid toner layers sliding.

**Patentansprüche**

1. Elektrophotographischer Farbdrucker mit einer Belichtungseinheit (103) zum gleichzeitigen Erzeugen von latenten Bildern zum Formen von Tonerbildern in zwei Farben, eines durch normales Entwickeln und das andere durch Inversionsentwickeln, **gekennzeichnet durch**

    - eine Beurteilungseinrichtung zum Beurteilen, ob ein Bildelement **durch** die Subtraktionsfarbmischmethode gebildet werden soll,
    - eine Einteilungseinrichtung zum Einteilen des positiv beurteilten Bildelements in zwei verschiedene Bereiche, die gleichzeitig von der Belichtungseinheit (103) belichtet werden,
    - eine Entwickeleinrichtung (104) zum Entwickeln der beiden Bereiche der eingeteilten Bildelemente **durch** normales bzw. Inversionsentwickeln mit unterschiedlichen Tonerschichtdicken und
    - eine Fixiereinrichtung (110) zum Fixieren des Tonerbildes beim Verschieben der Fluidtonerschichten.

2. Farbdrucker nach Anspruch 1, **dadurch gekenn-**

**zeichnet, daß** die Einteilungseinrichtung eine Bestimmungseinrichtung aufweist zum Bestimmen der Haftschichtdicke des Toners durch die Belichtungsmenge des Lasers (112), wobei der Haftbereich des Toners für normales Entwickeln und des Toners für inverses Entwickeln durch die Pulsweite in der Hauptabtastrichtung bestimmt ist.

3. Farbdrucker nach Anspruch 1 oder 2, **dadurch gekennzeichnet, daß** die Einteilungseinrichtung eine Bestimmungseinrichtung zum Bestimmen des Haftbereichs von Toner für normales Entwickeln und von Toner für inverses Entwickeln durch die Punktgrößer in der Sekundärabtastrichtung, und zum Bestimmen einer Haftschichtdicke durch die Belichtungsmenge des Lasers aufweist.

4. Farbdrucker nach einem der Ansprüche 1 bis 3, **dadurch gekennzeichnet, daß** die Belichtung so ausgeführt ist, daß in dem beurteilten Bildelement der Bereich des Umkehrentwickelns größer ist als der Bereich des Normalentwickelns und die Tonerhaftschichtdicke für inverses Entwickeln dünner wird als der Bereich für normales Entwickeln.

5. Farbdrucker nach einem der Ansprüche 1 bis 4, **dadurch gekennzeichnet, daß** die Fixiereinrichtung (110), die eine geeignete Verschiebung für das nicht-fixierte Tonerbild bewirkt, Einstellmittel zum Einstellen des Verschiebungsbetrags aufweist.

6. Farbdrucker nach Anspruch 5, **gekennzeichnet durch** eine Einrichtung zum Verändern einer Menge auf die Stützrolle eines Riemens zum Befördern des Blattes.

7. Farbdrucker nach einem der Ansprüche 1 bis 6, **dadurch gekennzeichnet, daß** die Ladeeinrichtung zum Umkehren der Polarität vor der Übergabe eine Einrichtung aufweist, die die Toner mit dem Farblicht einer gegensätzlichen Tonerfarbe anstrahlt.

8. Elektrophotographischer Farbdrucker mit einer ersten Belichtungseinheit (103) zum gleichzeitigen Erzeugen von latenten Bildern zum Erzeugen von Tonerbildern in einer ersten und einer zweiten Farbe, eines durch normales Entwickeln und das andere durch inverses Entwickeln und mit einer zweiten Belichtungseinheit (106) zum gleichzeitigen Erzeugen von latenten Bildern, um Tonerbilder in einer dritten und vierten Farbe zu erzeugen, eines durch normales Entwickeln und das andere durch inverses Entwickeln,
**gekennzeichnet durch**
eine Beurteilungseinrichtung zum Beurteilen, ob ein Bildelement **durch** ein Umkehrentwickeln gebildet werden soll nach einem Belichten **durch** eine der Belichtungseinheiten und **durch** normales Entwickeln nach einem Belichten **durch** die andere Belichtungseinheit,
eine Einteilungseinrichtung zum Einteilen der positiv beurteilten Bildelemente in zwei unterschiedliche Bereiche, die **durch** normales bzw. **durch** inverses Entwickeln mit unterschiedlichen Tonerschichtdicken entwickelt werden, und
eine Fixiereinrichtung (110) zum Fixieren des Tonerbildes beim Verschieben der Fluidtonerschichten.

9. Elektrophotographisches Farbdruckverfahren, bei dem gleichzeitig durch eine Belichtung latente Bilder erzeugt werden, um Bilder in zwei Farben zu erzeugen, eines durch normales Entwickeln und das andere durch inverses Entwickeln, **gekennzeichnet durch** die Schritte:

   - Beurteilen, ob ein Bildelement **durch** das Subtraktionsfarbmischverfahren gebildet werden soll,
   - Einteilen der positiv beurteilten Bildelemente in zwei unterschiedliche Bereiche,
   - Entwickeln der zwei Bereiche der eingeteilten Bildelemente **durch** normales bzw. **durch** inverses Entwickeln mit unterschiedlichen Tonerschichtdicken, und
   - Fixieren des Tonerbildes beim Verschieben der Fluidtonerschichten.

10. Elektrophotographisches Farbdruckverfahren, bei dem

   - gleichzeitig latente Bilder durch ein erstes Belichten erzeugt werden, um Bilder in einer ersten und einer zweiten Farbe zu erzeugen, eines durch normales Entwickeln und das andere durch inverses Entwickeln, und
   - gleichzeitig durch eine zweite Belichtung latente Bilder erzeugt werden, um Tonerbilder in einer dritten und einer vierten Farbe zu erzeugen, eines durch normales Entwickeln und das andere durch inverses Entwickeln,

   **gekennzeichnet durch** die Schritte:

   - Beurteilen, ob ein Bildelement **durch** ein Umkehrentwickeln nach einer der Belichtungen gebildet werden soll und **durch** normales Entwickeln nach der anderen der Belichtungen,
   - Einteilen der positiv beurteilten Bildelemente in zwei unterschiedliche Bereiche, die **durch** normales bzw. **durch** inverses Entwickeln mit unterschiedlichen Tonerschichtdicken entwickelt werden, und
   - Fixieren der Tonerbilder beim Verschieben der Fluidtonerschichten.

## Revendications

1. Imprimante électrophotographique couleur ayant une unité d'exposition (103) pour la création simultanée d'images latentes afin de former des images de toner en deux couleurs, l'une par développement normal et l'autre par développement en négatif, **Caractérisée par**

   - un moyen pour apprécier si un pixel doit être formé par synthèse soustractive,
   - un moyen pour diviser le pixel concerné positivement en deux zones différentes qui sont simultanément exposées par l'unité d'exposition (103),
   - un moyen (104) pour développer les deux zones du pixel divisé respectivement par le développement normal et en négatif ayant différentes épaisseurs de couche de toner, et
   - un moyen (110) pour fixer l'image de toner dans des conditions de projection de couches de toner fluide.

2. Imprimante couleur conformément à la revendication 1, **caractérisée en ce que** le moyen de division du pixel en deux zones différentes possède un moyen pour déterminer l'épaisseur de la couche d'adhésion du toner par le biais de la quantité d'exposition à un laser (112), les zones d'adhésion du toner à développement normal et du toner à développement en négatif étant déterminées par la largeur d'impulsion dans le sens du balayage principal.

3. Imprimante couleur conformément à la revendication 1 où 2, **caractérisée en ce que** le moyen de division possède un moyen pour déterminer les zones d'adhésion du toner à développement normal et du toner à développement en négatif par le biais de la taille du point dans le sens du balayage secondaire et pour déterminer l'épaisseur d'une couche d'adhésion par le biais de la quantité d'exposition du laser.

4. Imprimante couleur conformément à l'une des revendications 1 à 3, **caractérisée en ce que** l'exposition est effectuée de manière à ce que, dans le pixel concerné, la zone de développement en négatif soit plus importante que la zone de développement normal et que l'épaisseur de la couche d'adhésion du toner du développement en négatif devienne plus mince que la zone de développement normal.

5. Imprimante couleur conformément à l'une des revendications 1 à 4, **caractérisée en ce que** le moyen de fixation (110) provoquant une projection appropriée pour l'image de toner non fixe possède un moyen pour ajuster ladite quantité de projection.

6. Imprimante couleur conformément à la revendication 5, **caractérisée par** un moyen permettant de changer une quantité sur le presseur du rouleau d'une courroie destinée à transporter la feuille.

7. Imprimante couleur conformément à l'une des revendications 1 à 6, **caractérisée en ce que** le rechargeur pour inverser la polarité avant le transfert est muni d'un moyen pour appliquer la lumière colorée d'une couleur de toner négative sur les toners.

8. Imprimante électrophotographique couleur ayant une première unité d'exposition (103) pour la création simultanée d'images latentes afin de former des images de toner en une première et deuxième couleur, l'une par développement normal et l'autre par développement en négatif, et ayant une deuxième unité d'exposition (106) pour la création simultanée d'images latentes pour former des images de toner en une troisième et quatrième couleur, l'une par développement normal et l'autre par développement en négatif, **caractérisée par**

   - un moyen pour apprécier si un pixel doit être formé par développement en négatif ultérieur à l'exposition par l'une des unités d'exposition et par développement normal ultérieur à l'exposition à l'autre unité d'exposition,
   - un moyen pour diviser le pixel concerné positivement en deux zones différentes qui sont développées respectivement par développement normal et en négatif ayant différentes épaisseurs de couche de toner, et
   - un moyen (110) pour fixer l'image de toner dans des conditions de projection de couches de toner fluide.

9. Procédé d'impression électrophotographique couleur dans lequel les images latentes sont créées simultanément par une exposition pour former des images en deux couleurs, l'une par développement normal et l'autre par développement en négatif, **caractérisé par** les étapes consistant à :

   - apprécier si un pixel doit être formé par synthèse soustractive,
   - diviser le pixel concerné positivement en deux zones différentes,
   - développer les deux zones du pixel divisé respectivement par développement normal et en négatif ayant différentes épaisseurs de couche de toner et fixer une image de toner dans des conditions de projection de couches de toner fluide.

10. Procédé d'impression électrophotographique couleur dans lequel :

- les images latentes sont simultanément créées par une première exposition pour former des images en une première et une deuxième couleur, l'une par développement normal et l'autre par développement en négatif, et
- les images latentes sont simultanément créées par une deuxième exposition pour former des images de toner en une troisième et quatrième couleur, l'une par développement normal et l'autre par développement en négatif,

      **caractérisé par** les étapes consistant à

- apprécier si un pixel doit être formé par un développement en négatif ultérieur à l'une des expositions et par développement normal ultérieur à l'autre des expositions ;
- diviser le pixel concerné positivement en deux zones différentes, qui sont respectivement développées par développement normal et en négatif ayant différentes épaisseurs de couche de toner, et
- fixer les images de toner dans des conditions de projection de couches de toner fluide.

# FIG.1

FIXING 110  IMAGE SENSOR 113

TRASFER 109

PHOTO SENSITIVE BELT 101

1ST CHARGING 102

1ST EXPOSURE 103

2ND CHARGING 105

RECHARGING 108

CYAN 107c

MAGENTA 107m

YELLOW 104y

BLACK 104k

2ND DEVELOPMENT 107

1ST DEVELOPMENT 104

2ND EXPOSURE 106

LASER UNIT 112

# FIG.2

| 1ST CHARGING | 1ST EXPOSURE | 1ST DEVELOPMENT | 2ND CHARGING | 2ND EXPOSURE | 2ND DEVELOPMENT |
|---|---|---|---|---|---|

SURFACE POTENTIAL OF PHOTOSENSITIVE MEMBER

-800V

-400V

-150V

-50V

K ⊕

K ⊖   Y ⊖   Y ⊖

M ⊕

----- Vbk

Vby ......

E3 E4 E5

----- Vbm

Vbc ......

E1

⊖

E6 E7

⊖

E2

E8

⊖ ⊖

C

EP 0 807 864 B1

# FIG.3

EXPOSURE MEMORY 501

| IMAGE SIGNAL 500 (R,G,B) | COLOR | 1ST EXPOSURE | 2ND EXPOSURE | |
|---|---|---|---|---|
| (0,0,0) | W | E1 | E4 | |
| (1,1,1) | K | 0 | E3 | |
| (1,0,0) | R | E2 | 0 | |
| (0,1,0) | G | E2 | E6 | |
| (0,0,1) | B | E1 | E8* | *PULSE MODULATED |
| (0,1,1) | C | E1 | E7 | |
| (1,0,1) | M | E1 | 0 | |
| (1,1,0) | Y | E2 | E5 | |

# FIG.5

AFTER M.C. DEVELOPMENT

AFTER FIXING

COLOR OF TONER IMAGE

14

# FIG.4

## (1)

AFTER M.C.
DEVELOPMENT

AFTER FIXING

COLOR OF TONER IMAGE

## (2)

AFTER M.C.
DEVELOPMENT

AFTER FIXING

COLOR OF TONER IMAGE

# FIG.6

**(1)**

**(2)**

COMPACTED IN
MAIN SCANNING
DIRECTION

| C | M |
|---|---|

**(3)**

COMPACTED IN
SUB-SCANNING
DIRECTION

| C |
|---|
| M |

# FIG.7

SECOND BELT 603

BACK-UP ROLLER 605

SHEET 601

A

B

C

FIRST BELT 602

ROLLER 606

HEAT ROLLER 604

TONER IMAGE 607

# FIG.8

| | CONVENTIONAL FIXING DEVICE | INVENTIVE FIXING DEVICE |
|---|---|---|
| CHROMA TICNESS C* | 37 | 43 |
| CONENTRATION ΔE* | 48 | 55 |

EP 0 807 864 B1

# FIG.9

LAMP 701

MAGENTA FILTER 702

RE-CHARGER 108

C M K Y          C M K Y
⊖⊕⊖⊖          ⊖⊖⊖⊖

(1) STRUCTURE

SURFACE POTENTIAL OF PHOTOSENSITIVE MEMBER

M

⊖⊖⊕⊕
⊖⊖⊕⊕

(2) BEFORE RE-CHARGING

DE-CHARGING

⊖⊖
⊖⊖          ⊖ BLUE DEVELOPMENT

CHARGING     ⊕⊕
            ⊕⊕

M

(3) DURING RE-CHARGING

# FIG.11

SURFACE POTENTIAL OF PHOTOSENSITIVE MEMBER

| 1ST CHARGING | 1ST EXPOSURE | 1ST DEVELOPMENT | 2ND CHARGING | 2ND EXPOSURE | 2ND DEVELOPMENT |
|---|---|---|---|---|---|

-800V          K              K    Y  Y        M
              ⊕              ⊖    ⊖  ⊖        ⊕

-400V         ..... Vbk                        ..... Vbm
        E1    Vby .....    E3E4E5

-150V         ⊖                                ⊖
        E2    ⊖                E6E7

-50V                                               ⊖
        E8    Y               E8    C

# FIG.10

FIXING DIRECTION

(1)

(2)

(3)

(4)

# FIG.12

EXPOSURE
MEMORY 501

2ND EXPOSURE
MEMORY 503

DECODER 504

SEMICONDUCTOR
LASER 505

IMAGE SIGNAL
(RGB OR CMYK)
500

EXPOSURE
SIGNAL 502

E3 — DRIVER 1

E4 — DRIVER 2

E5 — DRIVER 3

E6 — DRIVER 4

E7 — DRIVER 5

E8 — DRIVER 6

508

BLUE
RED

DOT
CLOCK

SYNCHRONOUS
CLOCK 506

PULSE
WIDTH
SETTING

PULSE
WIDTH
MODULATION
CIRCUIT 507

# FIG.13

SURFACE POTENTIAL OF PHOTOSENSITIVE MEMBER

1ST
CHARGING

1ST
EXPOSURE

1ST
DEVELOPMENT

2ND
CHARGING

2ND
EXPOSURE

2ND
DEVELOPMENT

-800V     M ⊕     M ⊖   C ⊖  M ⊖   C ⊖     K ⊕

-450V   E1   ......   ..............

E4E5E6   .....

-150V   E2   ⊖

.....

-50V   ⊖

E3   C   E7E8E9   Y

## FIG.14

## FIG.15

| IMAGE SIGNAL 500 (R,G,B) | COLOR | 1ST EXPOSURE | 2ND EXPOSURE | |
|---|---|---|---|---|
| (0,0,0) | W | E1 | E8 | |
| (1,1,1) | K | E1 | 0 | |
| (1,0,0) | R | 0 | E4 | |
| (0,1,0) | G | E2 | E9 | |
| (0,0,1) | B | E3* | E7,E9 | *PULSE MODULATED |
| (0,1,1) | C | E2 | E9 | |
| (1,0,1) | M | 0 | E7 | |
| (1,1,0) | Y | E1 | E5 | |

21